# EUROPEAN PATENT APPLICATION

(11) **EP 4 803 174 A1**
(43) Date of publication of application: **09.09.2026**
(21) Application number: 26162348.2
(22) Date of filing: 04.03.2026
(51) Int. Cl.: B01D 35/30

(54) **MODULAR SYSTEM FOR FILTER CONTAINERS**

(30) Priority: 05.03.2025 IT 202500004569
(71) Applicant: Bedocchi, Gianluca, 42020 Reggio nell'Emilia (RE) (IT)
(72) Inventor: Bedocchi, Gianluca, 42020 Reggio nell'Emilia (RE) (IT)
(74) Representative: Cossu, Alessandro

(57) **Abstract**

A modular system for filter containers has a first (1) and a second (2) filter containers, each comprising a head (3) having a first portion (3a) on which a first opening (4) for the inlet of a fluid from a feeding source (S) and a second opening (5) for the outlet of the treated fluid toward a discharge zone (6) are formed; the first (4) and the second (5) openings are isolated from each other, a second portion (3b) provided with sealing connection members (7) between the first portion (3a) and a vessel (8) containing filtering cartridges or media (9) for treating the incoming fluid, and extending along a longitudinal axis (X), the first container (1) comprises the first portion (3a) having the second fluid outlet opening (5) composed of a male cylindrical bushing (10) transversely protruding with respect to the longitudinal axis (X); and the second container (2) comprises the first portion (3a) having the first inlet opening (4) composed of a female cylindrical bushing (11) configured to be engaged, slidably in use and sealingly, by the corresponding male cylindrical bushing (10) of the first container (1) so as to form a pair of filter containers in series. [FIG. 1]

## Description

The present invention relates to a modular system for filter containers and a joint head for filter containers.

In the technical field of water-based liquid purifications, one of the known solutions comprises the use of filter containers for treating the fluid, in particular, but not limited to, water.

A filter container comprises:
- a fluid distribution head provided with respective threaded holes for the inlet and outlet of the fluid, to ensure connection with hydraulic conduits for fluid inlet and outlet;
- a vessel of the transparent or opaque type, containing filter cartridges or media for treating the incoming fluid;
- sealing connection members between the vessel and the head, for example a ring nut and a sealing O-ring interposed between the lower part of the head and the upper end of the vessel.

The fluid to be treated thus enters via a first passage of the distribution head and flows into the vessel provided with filtering systems configured to allow the outlet of the treated fluid via a second passage of the distribution head;

Currently, in filtering systems for water-based fluid, the use of a single filter container of this type is not always sufficient, yet more filter containers in successive series are required to be able to treat the fluid in several passages, also through different filtering treatments.

To connect at least two filtering containers to each other in series, there are different solutions.

In a first solution, the two heads are associated with each other through a tubular-section fitting that is threaded on both of its ends (for example a nipple), capable of connecting an outlet conduit of a first head to the inlet conduit of the second head. Sealing elements, such as Teflon tape and/or sealing O-rings, must further be applied to the fitting.

In a second solution, there is provided a one-piece molding of a predetermined number of paired heads, with which the respective vessels are then associated.

The first solution illustrated has shown drawbacks due to the high cost related to the presence of several components capable of obtaining the modularity of the containers, to the complexity of assembling the fittings, and to the constant need to check the proper sealing of the fittings.

The second solution illustrated is costly due to the need to provide a plurality of high-precision molds for the formation of the heads and to high storage cost for the various combinations of heads combined in series.

It is the object of the present invention to make available a modular system for filter containers that overcomes the above-cited drawbacks of the prior art.

In particular, it is the object of the present invention to also make available a joint head for filter containers, capable of enabling simple and quick assembly of the filter containers in series.

It is a further object of the present invention to propose a modular system for filter containers capable of reducing warehouse costs and maintaining high performance over time.

Said objects are fully achieved by a modular system for several filter containers and a joint head for filter containers, which are the subject of the present invention being characterized by the features set forth in the claims below.

The main features of the invention will be more clearly apparent from the following description of a preferred embodiment, illustrated purely by way of example and not by way of limitation in the accompanying drawings, wherein:
- Figure 1 shows a first solution of modular system for filter containers according to the present invention, and in a side sectional view;
- Figure 2 shows a second solution of modular system for filter containers according to the present invention and in a side sectional view;
- Figure 3 shows a detail on an enlarged scale referring to Figure 1 in a side view with two heads spaced apart from each other;

- Figure 4 shows a detail on an enlarged scale referring to Figure 1 in a side view;
- Figure 5 shows a detail of two connections forming part of the modular system of the present invention, in an exploded perspective view, with some parts removed to better highlight others;

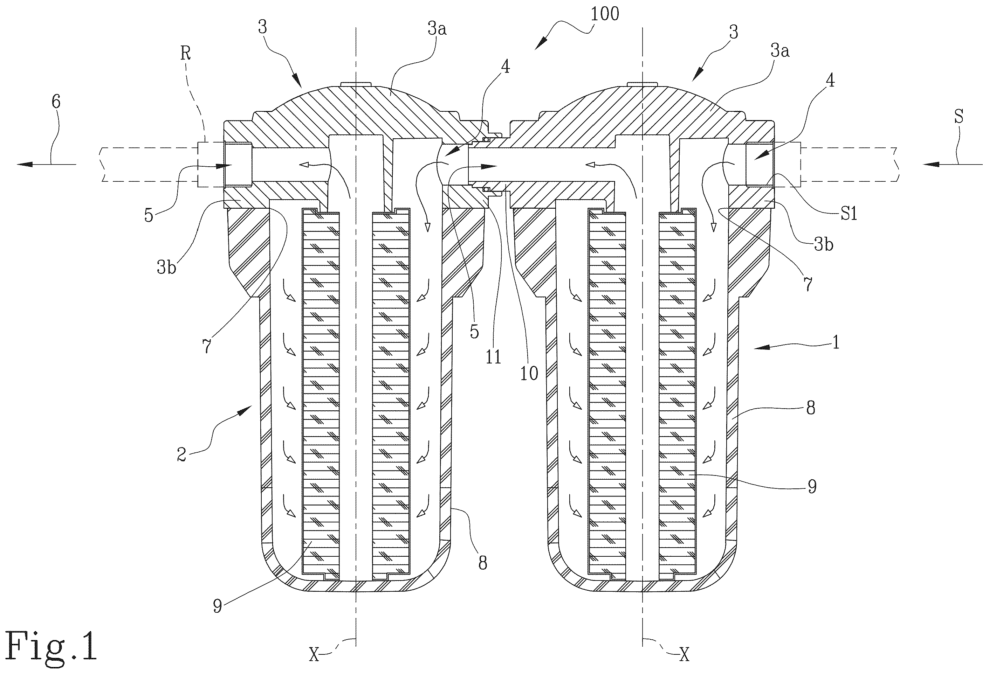

With reference to the accompanying drawings, and, in particular, with reference to Figure 1, the modular system in question, indicated as a whole by 100, is used for filter containers capable of treating fluids, in particular, but not limited to, water or aqueous-based fluids.

The modular system 100 comprises a first 1 and a second 2 filter containers.

Each first 1 and second 2 container comprises a head 3 and a vessel 8 containing filtering cartridges or media 9 for treating the incoming fluid.

As illustrated, each head 3 comprises a first portion 3a on which a first opening 4 for the inlet of a fluid from a feeding source S and a second opening 5 for the outlet of the treated fluid to a discharge zone 6 are formed.

In this light, the first 4 and the second 5 openings are isolated from each other to obtain the distribution and correct passage of the fluid between inlet and outlet.

Further, the head 3 comprises a second portion 3b provided with sealing connection members 7 (for example, threaded ring nuts provided with gaskets, not illustrated here) between the first portion 3a and the vessel 8 containing filtering cartridges or media 9 for treating the incoming fluid, which extends along a longitudinal axis X.

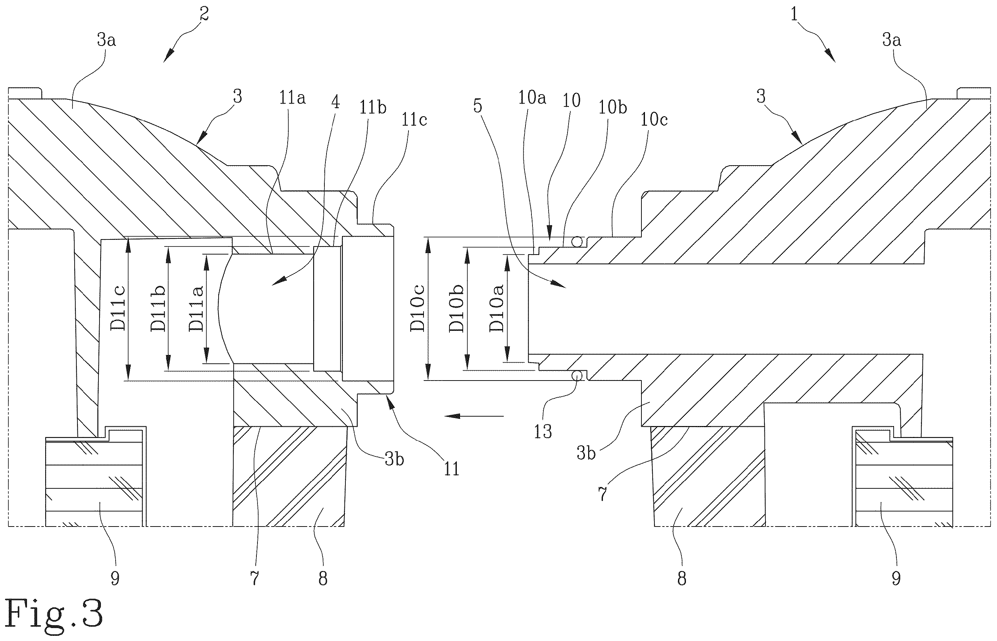

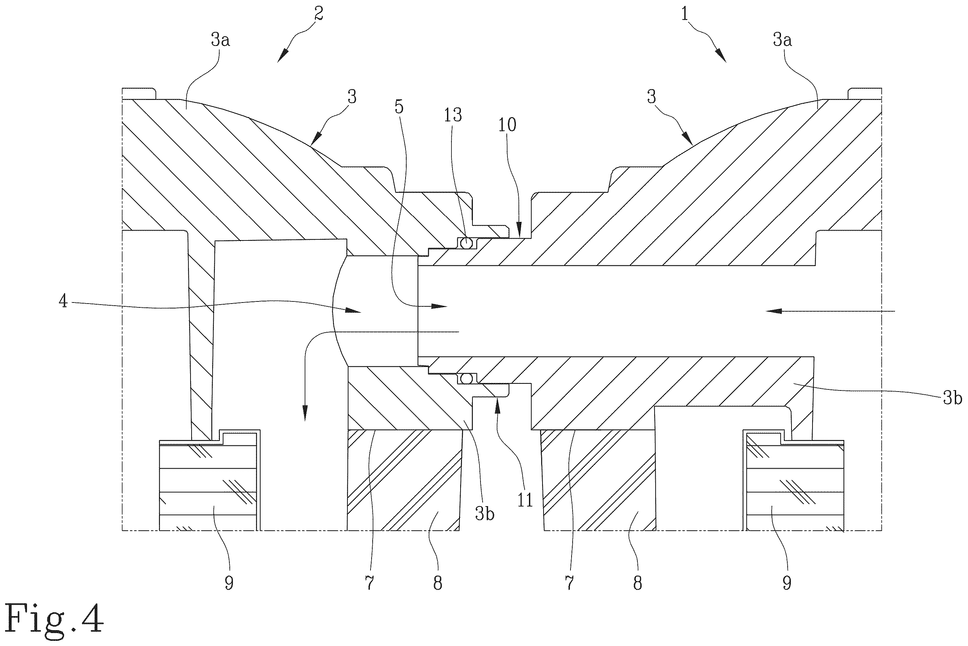

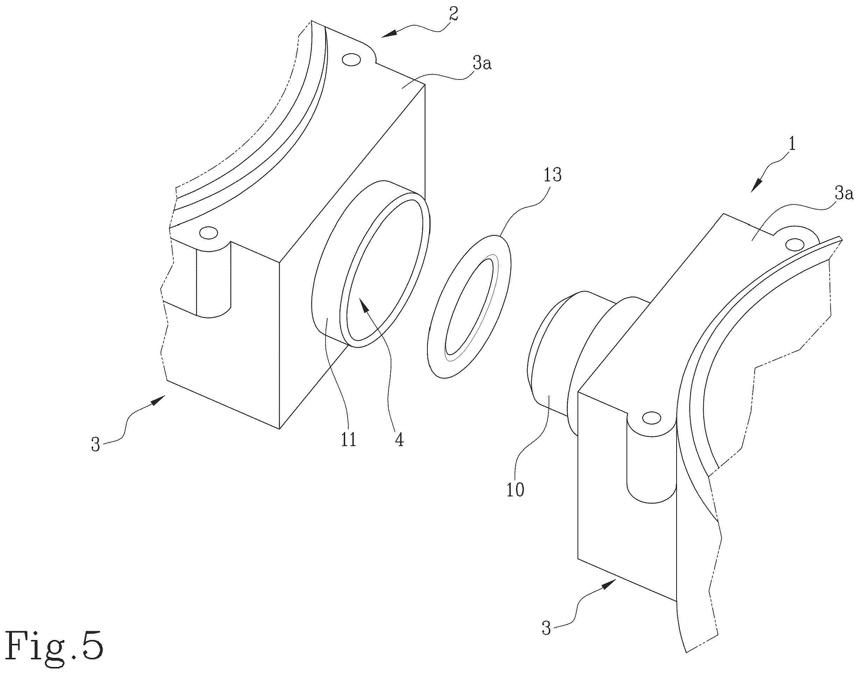

Again according to what illustrated (see also Figures 3-5), the first container 1 comprises the first portion 3a having the second fluid outlet opening 5 composed of a male cylindrical bushing 10 protruding transversely with respect to the longitudinal axis X.

The second container 2 comprises the first portion 3a having the first inlet opening 4 composed of a female cylindrical bushing 11 configured to be engaged, in use and sealingly slidable, by the corresponding male cylindrical bushing 10 of the first container 1 so as to form a pair of filter containers in series.

In this light, the first container 1 has the first inlet opening 4 provided with a cylindrical coupling thread with a corresponding fitting S1 connected to the fluid inlet source S.

It should be noted that the second container 2 has the second outlet opening 5 provided with a cylindrical coupling thread with a corresponding fitting R connected to the discharge zone 5 of the treated fluid.

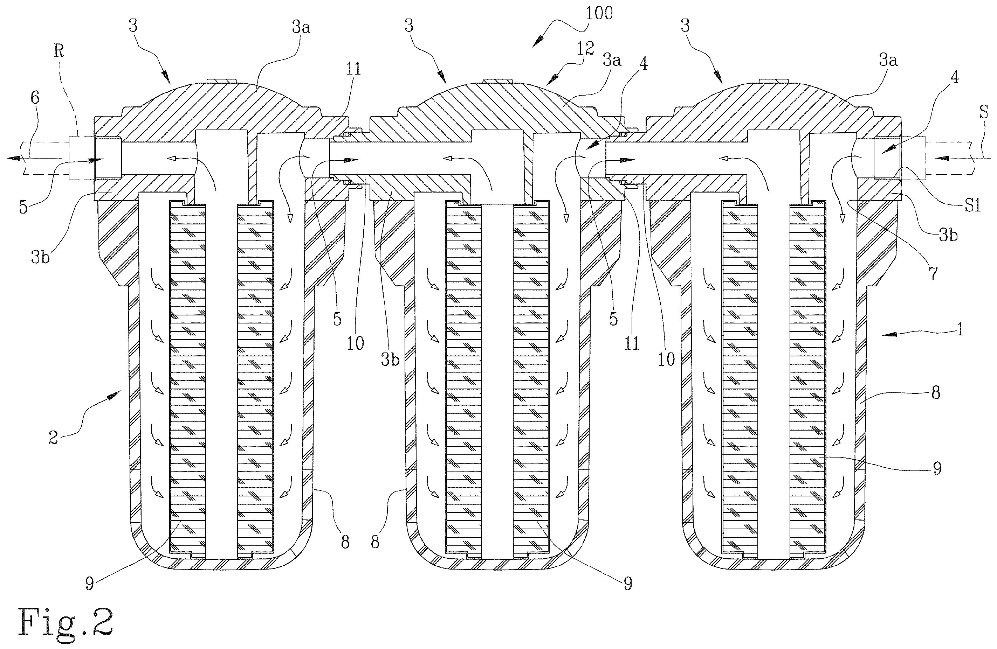

As confirmation of the validity of the solution, in the solution illustrated in Figure 2, the modular system 100 comprises a third filter container 12 interposed, in use, between the first 1 and the second 2 filter container.

In this light, the third filter container 12 comprises a head 3 having a first portion 3a provided with a first inlet opening 4 composed of a female cylindrical bushing 11 configured to be engaged, slidably in use and sealingly, by the corresponding male cylindrical bushing 10 of the first filter container 1.

The third filter container 12 comprises the second fluid outlet opening 5 composed of a male cylindrical bushing 10 slidably coupled in use, with the cylindrical female mouth 11 of the second filter container 2.

Thereby, there is obtained a system with three filter containers in series, capable of obtaining a high treatment quality, with simple and quick assembly, and with high operational quality.

As illustrated, each male cylindrical bushing 10 and female cylindrical bushing 11 is obtained in one-piece with the remaining first portion 3a of each head 3.

It should be noted that each male cylindrical bushing 10 of each head 3 is subdivided into three different sections:
- a distal section 10a, having a first diameter D10a;
- an intermediate section 10b having a second diameter D10b greater than the first diameter D10a of the distal section 10a, and configured for the housing, in use, of a sealing member 13 (for example an O-ring);
- a proximal section 10c having a third diameter D10c greater than the second diameter D10b of the intermediate section 10b and protruding from the first portion 3a of the respective head 3.

In this light, each female cylindrical bushing 11 of each head 3 is subdivided into three different sections:
- a proximal section 11a, having a first diameter D11a configured for coupling, in use, with the distal section 10a of the male cylindrical bushing 10;
- an intermediate section 11b having a second diameter D11b greater than the first diameter D11a of the proximal section 11a, and configured to define the housing, in use, of at least one part of the intermediate section 10b of the male cylindrical bushing 10.

Between the proximal section 11a and the intermediate section 11b, an annular end-of-stroke undercut is defined for housing the distal section 10a of the male cylindrical bushing 10.

The cylindrical bushing 11 also has a distal section 11c having a third diameter D11c greater than the second diameter D11b of the intermediate section 11b and configured for the housing, in use, a part of the proximal section 10c of the male cylindrical bushing 10.

Between the distal section 11c and the intermediate section 11b an annular undercut is obtained in which, in use, the sealing member 13 inserted in the intermediate section 10b of the male cylindrical bushing 10 is interposed.

It should be noted that this modular system 100 also comprises a dedicated bracket (not shown) configured with corresponding seats to stably support the respective containers in series.

This type of bracket allows to maintain safe functionality of the male bushing and female bushing joining system thanks to the fastening of the heads in the bracket seats.

The types of brackets will be determined as a function of the number of filter containers forming the modular system.

The present invention also provides a joint head for a filter container, comprising:
- a first portion 3a on which a first opening 4 for the inlet of a fluid from a feeding source S and a second opening 5 for the outlet of the treated fluid to a discharge zone 6 are formed, in which the first opening 4 and the second opening 5 are isolated from each other,
- a second portion 3b provided with sealing connection members 7 between the first portion 3a and a vessel 8 for containing filtering cartridges or media 9 for treating the incoming fluid, and extending along a longitudinal axis X.

The first portion 3a comprises the second fluid outlet opening 5 composed of a male cylindrical bushing 10 protruding transversely with respect to the longitudinal axis X and configured to be housed, in use and sealingly slidable, in a corresponding female cylindrical bushing 11 forming a first fluid inlet opening 4.

It should be noted that the first portion 3a comprises the first inlet opening 4 composed of a female cylindrical bushing 11 and configured to be engaged, slidably in use and sealingly, by a corresponding male cylindrical bushing 10 forming a second fluid outlet opening 5.

In this light, the first portion 3a comprises the second outlet opening 5 comprising the male cylindrical bushing 10, and in which the first inlet opening 4 is provided with a cylindrical coupling thread with a corresponding threaded fitting S1, connected to the fluid inlet source S. Thanks to this modular system, it is possible to obtain different types of filtering assemblies starting from a minimum configuration of two filter containers assembled in line to further expand the system according to the user's requirements, thanks to a very simple and quick coupling system free of threaded connection components or other locking components.

## Claims

1. A modular system for filter containers comprising at least a first (1) and a second (2) filter container, each comprising a head (3) having:
- a first portion (3a) on which a first opening (4) for the inlet of a fluid from a feeding source (S) and a second opening (5) for the outlet of the treated fluid to a discharge zone (6) are formed; the first (4) and the second (5) opening being isolated from each other,
- a second portion (3b) provided with sealing connection members (7) between the first portion (3a) and a vessel (8) containing filtering cartridges or media (9) for treating the incoming fluid, and extending along a longitudinal axis (X), **characterized in that**:
- the first container (1) comprises the first portion (3a) having the second fluid outlet opening (5) comprising a male cylindrical bushing (10) protruding transversely with respect to the longitudinal axis (X);
- the second container (2) comprises the first portion (3a) having the first inlet opening (4) comprising a female cylindrical bushing (11) configured to be engaged, slidably in use and sealingly, by the corresponding male cylindrical bushing (10) of the first container (1) so as to form a pair of filter containers in series.

2. A system according to claim 1, wherein the first container (1) has the first inlet opening (4) provided with a cylindrical coupling thread with a corresponding fitting (S1) connected to the fluid inlet source (S).

3. A system according to claims 1-2, wherein the second container (2) has the second outlet opening (5) provided with a cylindrical coupling thread with a corresponding fitting (R) connected to the treated fluid discharge zone (5).

4. A system according to any one of claims 1-3, comprising a third filter container (12) interposed, in use, between the first (1) and second (2) filter containers; the third filter container (12) comprising a head (3) having a first portion (3a) provided with a first inlet opening (4) comprising a female cylindrical bushing (11) configured to be engaged, slidably in use and sealingly, by the corresponding male cylindrical bushing (10) of the first filter container (1) and a second fluid outlet opening (5) comprising a male cylindrical bushing (10) slidably coupled, in use, with the female cylindrical mouth (11) of the second filter container (2).

5. A system according to any one of the preceding claims 1-4, wherein each male cylindrical bushing (10) and female cylindrical bushing (11) is obtained in one body with the remaining first portion (3a) of each head (3).

6. A system according to any one of the preceding claims, wherein each male cylindrical bushing (10) is divided into three different sections:
- a distal section (10a), having a first diameter (D10a);
- an intermediate section (10b) having a second diameter (D10b) greater than the first diameter (D10a), and configured for housing, in use, a sealing member (13);
- a proximal section (10c) having a third diameter (D10c) greater than the second diameter (D10b) and protruding from the first portion 3a of the respective head (3).

7. A system according to claim 6, wherein each female cylindrical bushing (11) is divided into three different sections:
- a proximal section (11a), having a first diameter (D11a) configured for coupling, in use, with the distal section (10a) of the male cylindrical bushing (10);
- an intermediate section (11b) having a second diameter (D11b) greater than the first diameter (D11a) of the proximal section (11a), and configured to define the housing in use, at least of a part of the intermediate section (10b) of the male cylindrical bushing (10); between the proximal section (11a) and the intermediate section (11b) an annular end-of-stroke undercut being defined for housing the distal section (10a) of the male cylindrical bushing (10);
- a distal section (11c) having a third diameter (D11c) greater than the second diameter (D11b) of the intermediate section (11b) and configured for housing, in use, a part of the proximal section (10c) of the male cylindrical bushing (10); between the distal section (11c) and the intermediate section (11b) an annular undercut being defined in which, in use, the sealing member (13) is interposed, inserted into the intermediate section (10b) of the male cylindrical bushing (10).

8. A joint head for a filter container, comprising:
- a first portion (3a) on which a first opening (4) for the inlet of a fluid from a feeding source (S) and a second opening (5) for the outlet of the treated fluid to a discharge zone (6) are formed; the first (4) and the second (5) opening being isolated from each other,
- a second portion (3b) provided with sealing connection members (7) between the first portion (3a) and a vessel (8) containing filtering cartridges or media (9) for treating the incoming fluid, and extending along a longitudinal axis (X), **characterized in that** the first portion (3a) comprises the second fluid outlet opening (5) consisting of a male cylindrical bushing (10) protruding transversely with respect to the longitudinal axis (X) and configured to be housed, in use and sealingly slidable, in a corresponding female cylindrical bushing (11) forming a first fluid inlet opening (4).

9. A joint head according to claim 8, wherein the first portion (3a) comprises the first inlet opening (4) comprising a female cylindrical bushing (11) and configured to be engaged, slidably in use and sealingly, by a corresponding male cylindrical bushing (10) forming a second fluid outlet opening (5).

10. A head according to claim 8, wherein the first portion (3a) comprises the second outlet opening (5) comprising the male cylindrical bushing (10), and wherein the first inlet opening (4) is provided with a cylindrical coupling thread with a corresponding threaded fitting (S1) connected to the fluid inlet source (S).
